# EUROPÄISCHE PATENTANMELDUNG

(11) **EP 4 692 843 A1**
(43) Veröffentlichungstag der Anmeldung: **11.02.2026**
(21) Anmeldenummer: 25191307.5
(22) Anmeldetag: 23.07.2025
(51) Int. Cl.: G01S 7/486, G01S 17/06, G01S 17/10

(54) **VERFAHREN ZUM BETREIBEN EINES ANALOG-DIGITAL-WANDLERS IN EINEM LASER-SYSTEM**

(30) Priorität: 07.08.2024 DE 102024207466
(71) Anmelder: Robert Bosch GmbH, 70442 Stuttgart (DE)
(72) Erfinder: Copeto, David, 71638 Ludwigsburg (DE); Noe, Stefan, 70563 Stuttgart (DE); Hoffarth, Joern, 72764 Reutlingen (DE)

(57) **Zusammenfassung**

Die Erfindung betrifft ein Verfahren (100) zum Betreiben eines Analog-Digital-Wandlers (2) in einem Laser-System (1), umfassend die nachfolgenden Schritte:
- Initiieren (101) eines Betriebs des Laser-Systems (1) in einem gepulsten Laserbetrieb, wobei in dem gepulsten Laserbetrieb nur in definierten Zeitabschnitten Licht durch das Laser-System (1) emittiert wird,
- Freigeben (102) des Betreibens des Analog-Digital-Wandlers (2) des Laser-Systems (1) in den definierten Zeitabschnitten des gepulsten Laserbetriebs, in denen Licht durch das Laser-System (1) emittiert wird,
- Blockieren (103) des Betreibens des Analog-Digital-Wandlers (2) in Zeitabschnitten des gepulsten Laserbetriebs, in denen kein Licht durch das Laser-System (1) emittiert wird.

Ferner betrifft die Erfindung ein Computerprogramm, eine Vorrichtung sowie ein Speichermedium zu diesem Zweck.

## Beschreibung

Die Erfindung betrifft ein Verfahren zum Betreiben eines Analog-Digital-Wandlers in einem Laser-System. Ferner betrifft die Erfindung ein Computerprogramm, eine Vorrichtung sowie ein Speichermedium zu diesem Zweck.

### Stand der Technik

Moderne Laser-Anwendungen, die in zahlreichen Bereichen wie der Industrie, Medizin, Kommunikation und Forschung zum Einsatz kommen, erfordern eine hochpräzise Regelung und Überwachung der Laserparameter. Analoge Signale, die von verschiedenen Sensoren innerhalb des Lasersystems stammen, müssen in digitale Daten umgewandelt werden, um von der Steuerelektronik verarbeitet werden zu können. Die Nutzung von Analog-Digital-Wandlern ermöglicht es, diese analogen Messwerte in Echtzeit und mit hoher Genauigkeit in digitale Signale zu konvertieren, wodurch eine präzise Regelung der Laserleistung, Temperatur und anderer kritischer Parameter gewährleistet wird.

### Offenbarung der Erfindung

Gegenstand der Erfindung ist ein Verfahren mit den Merkmalen des Anspruchs 1, ein Computerprogramm mit den Merkmalen des Anspruchs 8, eine Vorrichtung mit den Merkmalen des Anspruchs 9 sowie ein computerlesbares Speichermedium mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Betreiben, insbesondere gezielten Betreiben, eines Analog-Digital-Wandlers in einem Laser-System, umfassend die nachfolgenden Schritte, wobei die Schritte wiederholt und/oder nacheinander oder in einer bestimmten Reihenfolge durchgeführt werden können. Das Laser-System ist insbesondere ein Laser-Entfernungsmessgerät. Das gezielte Betreiben bezieht sich insbesondere auf ein zeitlich gezieltes Betreiben, d.h. ein Betreiben in bestimmten Zeitabschnitten, durch den Analog-Digital-Wandler. Der Analog-Digital-Wandler wandelt insbesondere analoge Signale, die von einem Detektor des Laser-Systems empfangen werden, in digitale Signale um.

In einem ersten Schritt wird vorzugsweise ein Betrieb des Laser-Systems in einem gepulsten Laserbetrieb initiiert, wobei in dem gepulsten Laserbetrieb nur in definierten Zeitabschnitten Licht durch das Laser-System emittiert wird (sogenannte "Bursts"). In anderen Worten werden dabei insbesondere zeitlich begrenzte Lichtpulse durch einen Laser des Laser-Systems emittiert. Dadurch kann vorteilhaft eine mittlere Laserleistung reduziert werden, welche beispielsweise relevant im Hinblick auf eine Gefährdung von Augen eines Benutzers ist. Gleichzeitig kann dabei die Laserleistung, die während der Lichtpulse emittiert wird, erhöht werden, was zu einer Verbesserung des Signal zu Rausch Verhältnisses führen kann. Die definierten Zeitabschnitte können beispielsweise im Millisekunden-Bereich liegen.

In einem weiteren Schritt wird vorzugsweise das Betreiben des Analog-Digital-Wandlers des Laser-Systems in den definierten Zeitabschnitten des gepulsten Laserbetriebs freigegeben, in denen Licht durch das Laser-System emittiert wird. In anderen Worten wird hierbei ein Wandlermodus des Analog-Digital-Wandlers freigegeben, in welchem der Analog-Digital-Wandler zur Wandlung analoger Signale in digitale Signale betrieben wird. So kann vorteilhaft eine Messung durch das Laser-System auf die definierten Zeitabschnitte des gepulsten Laserbetriebs reduziert werden, in denen vorteilhaft eine höhere Laserleistung verwendet werden kann, als bei einem kontinuierlichen Modus des Laser-Systems. So kann vorteilhaft das Signal, das der Analog-Digital-Wandler empfängt, erhöht werden.

In einem weiteren Schritt wird vorzugsweise das Betreiben des Analog-Digital-Wandlers in Zeitabschnitten des gepulsten Laserbetriebs blockiert, in denen kein Licht durch das Laser-System emittiert wird. So kann vorteilhaft verhindert werden, dass der Analog-Digital-Wandler ein irrelevantes Signal im Hinblick auf die Messung des Laser-Systems empfängt und damit der erforderliche Dynamikbereich des Analog-Digital-Wandlers verringert wird, was Kosten und Energie sparen kann.

Ein Vorteil, der sich aus dem Verfahren gemäß der Erfindung ergibt, ist dass der Dynamik-Umfang, den der Analog-Digital-Wandlers leisten muss, wesentlich kleiner ist. Denkbar sind beispielsweise Laser-Systeme mit einer Pulsleistung von 5mW. Bei der Dimensionierung der Elektronik kann durch das Verfahren gemäß der vorliegenden Erfindung beispielsweise eine 14bit Auflösung des Analog-Digital-Wandlers zwischen 4 und 6mW verteilt werden. Ohne die Erfindung müsste die Auflösung beispielsweise von 0 bis 6mW verteilt werden. Neben den Vorteilen für den Analog-Digital-Wandler, kann auch eine Komplexität der Filter und die Einschwingzeit der Filter stark reduziert werden. Würde man beispielsweise einen Tiefpassfilter der ersten Ordnung mit einer Eckfrequenz gleich der Burstperiode von 1ms wählen hätte man insbesondere trotz der Filterung eine Restwelligkeit von einem halben Signal. Also müsste man beispielsweise mindestens die Eckfrequenz um einen Faktor 20 reduzieren also 20ms oder 50Hz. Bis so ein Filter zu 95% geladen ist, würde das Einschalten des Lasers insbesondere 60ms dauern. Mit dem Verfahren gemäß der Erfindung würden hier insbesondere nur 5ms gebraucht werden.

Zudem ist im Rahmen der Erfindung denkbar, dass die definierten Zeitabschnitte kürzer sind als eine Wandlungsrate des Analog-Digital-Wandlers. In diesem Fall kann das Verfahren gemäß der vorliegenden Erfindung besonders vorteilhaft sein, da es sonst zu einer Reduzierung einer Auflösung des Analog-Digital-Wandlers kommen kann.

Außerdem kann das Licht, das in dem gepulsten Laserbetrieb durch das Laser-System emittiert wird, durch das Laser-System intensitätsmoduliert werden, insbesondere mit unterschiedlichen Frequenzen. Eine Intensitätsmodulation ist insbesondere vorteilhaft, wenn das Laser-System als ein Laser-Entfernungsmessgerät ausgebildet ist.

Bevorzugt kann im Rahmen der Erfindung vorgesehen sein, dass das Verfahren ferner den folgenden Schritt umfasst:
- Definieren einer Verzögerungszeitspanne.

Das Freigeben des Betreibens kann anschließend jeweils um die definierte Verzögerungszeitspanne versetzt durchgeführt werden. In anderen Worten wird das Betreiben durch den Analog-Digital-Wandler vorzugsweise in einem jeweiligen Lichtpuls, d.h. in einem jeweiligen definierten Zeitabschnitt, in dem Licht durch das Laser-System emittiert wird, immer erst nach Ablauf der definierten Verzögerungszeitspanne durchgeführt. So können vorteilhaft Fehler oder besondere charakteristische Merkmale, die bei einem Einschalten des Lasers auftreten, bei dem Betreiben außer Acht gelassen werden.

In einer weiteren Möglichkeit kann vorgesehen sein, dass das Verfahren ferner den folgenden Schritt umfasst:
- Ermitteln einer Einschwingzeit und/oder einer Überschwingzeit eines Lasers des Laser-Systems bei einem Einschalten des Lasers.

Die Verzögerungszeitspanne kann dann unter Berücksichtigung der ermittelten Einschwingzeit und/oder Überschwingzeit definiert werden. Insbesondere kann die Verzögerungszeitspanne dem Wert der ermittelten Einschwingzeit und/oder Überschwingzeit des Lasers entsprechen, welcher gegebenenfalls zusätzlich um einen Puffer-Wert ergänzt werden kann. So kann vorteilhaft das anfängliche Ein- und/oder Überschwingen des Lasers, das zu verzerrten Werten führen kann, exkludiert werden.

Des Weiteren ist es im Rahmen der Erfindung optional möglich, dass das Ermitteln der Einschwingzeit und/oder Überschwingzeit mittelnd über wenigstens zwei Perioden des gepulsten Laserbetriebs durch ein Leistungsmessmittel erfolgt. Das Leistungsmessmittel kann beispielsweise ein Laserpowermeter sein.

Das Leistungsmessmittel kann ferner einen Filter verwenden. Wenn das Einschwingen für die Verzögerungszeit ermittelt werden soll, benötigt man insbesondere ein sehr schnelles Laserpowermeter. Wenn die Laserleistung nahe einer gesetzlichen Laserklasse-Grenze gelegt werden soll, kann es beispielsweise sinnvoll sein ein über 250ms mittelndes Laserpowermeter zu verwenden. Eine Periode des gepulsten Laserbetriebs entspricht insbesondere einem jeweiligen definierten Zeitabschnitt, in dem Licht durch das Laser-Systems emittiert wird. In anderen Worten umfasst eine Periode insbesondere eine Zeit von einem Laserpuls zum nächsten, einschließlich der Dunkelzeit. Durch das Mitteln können vorteilhaft statistische Fehler ausgeglichen werden.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann. Die Vorrichtung kann auch eine analoge diskrete elektronische Schaltung oder eine integrierte elektronische Schaltung sein, die entsprechend eingerichtet ist, das erfindungsgemäße Verfahren auszuführen.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Vorrichtung, eines Speichermediums sowie eines Computerprogramms gemäß Ausführungsbeispielen der Erfindung,
- Fig. 2: eine schematische Darstellung eines Laser-Systems gemäß Ausführungsbeispielen der Erfindung.

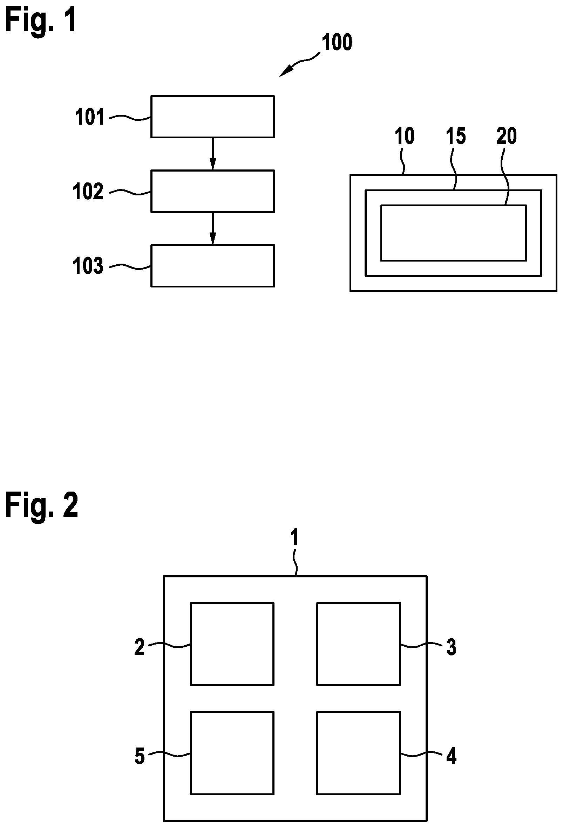

In Fig. 1 sind ein Verfahren 100, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Betreiben eines Analog-Digital-Wandlers 2 in einem Laser-System 1. In einem ersten Schritt 101 wird ein Betrieb des Laser-Systems 1 in einem gepulsten Laserbetrieb initiiert, wobei in dem gepulsten Laserbetrieb nur in definierten Zeitabschnitten Licht durch das Laser-System 1 emittiert wird. In einem zweiten Schritt 102 wird das Betreiben des Analog-Digital-Wandlers 2 des Laser-Systems 1 in den definierten Zeitabschnitten des gepulsten Laserbetriebs freigegeben, in denen Licht durch das Laser-System 1 emittiert wird. In einem dritten Schritt 103 wird das Betreiben des Analog-Digital-Wandlers 2 in Zeitabschnitten des gepulsten Laserbetriebs blockiert, in denen kein Licht durch das Laser-System 1 emittiert wird.

Das Verfahren der vorliegenden Erfindung betrifft ein Laser-System 1 und gemäß Ausführungsbeispielen insbesondere ein Laser-Entfernungsmessgerät, das die indirekte Time of Flight (iToF)-Messung verwendet. Für dieses Ausführungsbeispiel sei auf Fig. 2 verwiesen. Dieses Laser-Entfernungsmessgerät 1 arbeitet beispielsweise mit einer Messung einer Phasenverschiebung eines modulierten Lichtsignals, das vom Laser-Entfernungsmessgerät ausgesendet und von einem Zielobjekt reflektiert wird. Im Folgenden wird die Funktionsweise der indirekten Time of Flight (iToF)-Messung beschrieben. Zunächst kann ein Laser 3 im Laser-Entfernungsmessgerät 1 intensitätsmoduliertes Licht, beispielsweise im infraroten oder sichtbaren Bereich, in Richtung eines Zielobjekts sendet. Die Modulation erfolgt insbesondere mit einer sinusförmigen oder Rechteckwelle. Das intensitätsmodulierte Licht trifft anschließend auf das Zielobjekt und wird zurück zum Laser-Entfernungsmessgerät 1 reflektiert. Ein Detektor 4 im Messgerät kann nun das reflektierte Licht empfangen. Da das Licht eine gewisse Zeit benötigt, um die Strecke hin und zurück zu legen, kommt es zu einer Phasenverschiebung zwischen dem ausgesendeten und dem empfangenen Signal. Diese Phasenverschiebung zwischen dem ausgesendeten und dem empfangenen Signal kann anschließend gemessen werden. Diese Phasenverschiebung ist insbesondere proportional zur zurückgelegten Entfernung des Lichts. Die Entfernung kann anschließend aus der Phasenverschiebung unter Berücksichtigung der Wellenlänge der Modulation und der Lichtgeschwindigkeit berechnet werden. Hierbei kann ferner vorgesehen sein, dass eine Referenzphase mit einem konstanten Abstand bestimmt wird, um die Phasenverschiebung auf Basis eines Vergleiches mit der Referenzphase zu bestimmen.

Das Laser-Entfernungsmessgerät 1 kann einen Messregler 5 aufweisen. Der Messregler 5 übernimmt insbesondere eine Steuerung des Lasers 3.

So kann der Messregler 5 eine Emission des Lasers 3 steuern, indem er ein Ein- und Ausschalten sowie eine Intensität und die Modulation eines Laserstrahls des Lasers 3 regelt. Dadurch kann sichergestellt werden, dass der Laserstrahl mit der richtigen Leistung und den richtigen Eigenschaften ausgesendet wird.

Ferner kann ein Laserstrahl des Laser-Systems 1 moduliert werden, beispielsweise in Form von gepulstem Licht und/oder einer kontinuierlichen Welle mit variabler Modulationsfrequenz. Das Modulieren in Form des gepulsten Lichts entspricht insbesondere dem gepulsten Laserbetrieb gemäß der vorliegenden Erfindung. Nach dem Empfang eines Anteils des emittierten Laserlichts durch den Detektor 4 kann das empfangene Signal verarbeitet werden. Dies umfasst beispielsweise eine Verstärkung, Filterung und Umwandlung des empfangenen analogen Signals in ein digitales Signal zur weiteren Analyse, insbesondere durch einen Analog-Digital-Wandler (nicht dargestellt). Ferner kann die Phasenverschiebung zwischen dem ausgesendeten und dem empfangenen Signal gemessen und gegebenenfalls mit der Referenzphase verglichen werden.

Der Messregler 5 kann ferner regelmäßig Kalibrierungen durch führen, um sicherzustellen, dass die Messungen präzise sind. Dafür kann er einen Zustand des Lasers 3 und des Detektors 4 überwachen, um sicherzustellen, dass diese ordnungsgemäß funktionieren.

Zudem kann das Laser-System 1, insbesondere das Laser-Entfernungsmessgerät, einen Analog-Digital-Wandler 2 aufweisen. Der Analog-Digital-Wandler 2 wandelt vorzugsweise analoge Signale, die vom Detektor 4 empfangen werden, in digitale Signale um. Diese Signale repräsentieren insbesondere eine emittierte Lichtintensität, die vom Laser 3 ausgesendet wird. Die digitale Umwandlung kann es ermöglichen, die Phasenverschiebung zwischen dem ausgesendeten und dem empfangenen Signal zu analysieren. Die digitalen Signale, die vom Analog-Digital-Wandler 2 bereitgestellt werden, können weiter gefiltert, verstärkt und verarbeitet werden, um Rauschen zu reduzieren und die Signalqualität zu verbessern.

Ein Signal von einem Burst-Timer einer Mess-Statemachine des Laser-Systems 1 gibt vorzugsweise die Freigabe zum Betreiben des Analog-Digital-Wandlers 2. Wenn der Lichtpuls zu Ende ist, wird der gesamte Analog-Digital-Wandlers 2 vorzugsweise blockiert, bzw. angehalten. Zum nächsten Lichtpuls des gepulsten Laserbetriebs setzt der Analog-Digital-Wandler 2 seine Arbeit vorzugsweise jeweils wieder fort. Die Mess-Statemachine ist insbesondere ein Modell, das zur Steuerung und Verwaltung von Messprozessen verwendet werden kann. Sie basiert insbesondere auf dem Konzept eines Zustandsautomaten (State Machine), welcher verschiedene Zustände und Übergänge zwischen diesen Zuständen definiert. Diese Zustände repräsentieren beispielsweise unterschiedliche Phasen oder Schritte im Messprozess.

Durch das Definieren der Verzögerungszeitspanne kann vorteilhaft das Einschwingen und/oder Überschwingen des Lasers 3 von dem Wandelfenster des Analog-Digital-Wandlers 2 ausgeschlossen werden. Der Analog-Digital-Wandler 2 startet demnach vorzugsweise erst, wenn der Laser 3 wieder stabil ist. Durch die Annahme, dass die Einschwingzeit und Überschwinghöhe über Temperatur und Alterung gleichbleiben, können diese ausgeklammert werden. Die Einschwingzeit und/oder Überschwinghöhe können mittelnd erfasst werden. Für die Einregelung der emittierten Laserleistung kann ein stark filterndes Laserpowermeter eingesetzt werden, welches mehrere Perioden des gepulsten Laserbetriebs des Laser-Systems 1 mittelt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Betreiben eines Analog-Digital-Wandlers (2) in einem Laser-System (1), umfassend die nachfolgenden Schritte:
- Initiieren (101) eines Betriebs des Laser-Systems (1) in einem gepulsten Laserbetrieb, wobei in dem gepulsten Laserbetrieb nur in definierten Zeitabschnitten Licht durch das Laser-System (1) emittiert wird,
- Freigeben (102) des Betreibens des Analog-Digital-Wandlers (2) des Laser-Systems (1) in den definierten Zeitabschnitten des gepulsten Laserbetriebs, in denen Licht durch das Laser-System (1) emittiert wird,
- Blockieren (103) des Betreibens des Analog-Digital-Wandlers (2) in Zeitabschnitten des gepulsten Laserbetriebs, in denen kein Licht durch das Laser-System (1) emittiert wird.

2. Verfahren (100) nach Anspruch 1,
**dadurch gekennzeichnet,**
**dass** der Analog-Digital-Wandler (2) analoge Signale, die von einem Detektor (3) des Laser-Systems (1) empfangen werden, in digitale Signale umwandelt und die definierten Zeitabschnitte kürzer sind als eine Wandlungsrate des Analog-Digital-Wandlers (2).

3. Verfahren (100) nach einem der vorhergehenden Ansprüche,
**dadurch gekennzeichnet,**
**dass** das Licht, das in dem gepulsten Laserbetrieb durch das Laser-System (1) emittiert wird, durch das Laser-System (1) intensitätsmoduliert wird.

4. Verfahren (100) nach einem der vorhergehenden Ansprüche,
**dadurch gekennzeichnet,**
**dass** das Verfahren (100) ferner den folgenden Schritt umfasst:
- Definieren einer Verzögerungszeitspanne,
wobei das Freigeben (102) des Betreibens jeweils um die definierte Verzögerungszeitspanne versetzt durchgeführt wird.

5. Verfahren (100) nach Anspruch 4,
**dadurch gekennzeichnet,**
**dass** das Verfahren (100) ferner den folgenden Schritt umfasst:
- Ermitteln einer Einschwingzeit und/oder einer Überschwingzeit eines Lasers (4) des Laser-Systems (1) bei einem Einschalten des Lasers (4),
wobei die Verzögerungszeitspanne unter Berücksichtigung der ermittelten Einschwingzeit und/oder Überschwingzeit definiert wird.

6. Verfahren (100) nach Anspruch 5,
**dadurch gekennzeichnet,**
**dass** das Ermitteln der Einschwingzeit und/oder Überschwingzeit mittelnd über wenigstens zwei Perioden des gepulsten Laserbetriebs durch ein Leistungsmessmittel (5) erfolgt.

7. Verfahren (100) nach einem der vorhergehenden Ansprüche,
**dadurch gekennzeichnet,**
**dass** das Laser-System (1) ein Laser-Entfernungsmessgerät ist.

8. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

9. Vorrichtung (10) zur Datenverarbeitung, die eingerichtet ist, das Verfahren (100) nach einem der Ansprüche 1 bis 7 auszuführen.

10. Computerlesbares Speichermedium (15), umfassend Befehle, die bei der Ausführung durch einen Computer (10) diesen veranlassen, die Schritte des Verfahrens (100) nach einem der Ansprüche 1 bis 7 auszuführen.
